Europäisches Patentamt

European Patent Office

Office européen des brevets

(19)

(11) Veröffentlichungsnummer: **0 316 273 B1**

(12) **EUROPÄISCHE PATENTSCHRIFT**

(45) Veröffentlichungstag der Patentschrift:
29.05.91 Patentblatt 91/22

(51) Int. Cl.⁵: **B65G 35/04, B65G 35/00**

(21) Anmeldenummer: **88810740.6**

(22) Anmeldetag: **28.10.88**

(54) **Fördersystem.**

(30) Priorität: **10.11.87 CH 4365/87**

(43) Veröffentlichungstag der Anmeldung:
**17.05.89 Patentblatt 89/20**

(45) Bekanntmachung des Hinweises auf die
Patenterteilung:
**29.05.91 Patentblatt 91/22**

(84) Benannte Vertragsstaaten:
**CH DE FR GB IT LI SE**

(56) Entgegenhaltungen:
**EP-A- 0 091 557**
**FR-A- 2 357 444**

(73) Patentinhaber: **SFT AG Spontanfördertechnik**
**Tannwiesenstrasse 5**
**CH-8570 Weinfelden (CH)**

(72) Erfinder: **Meier, Jacques**
**Hinterer Engelstein 17**
**CH-8344 Bäretswil (CH)**

(74) Vertreter: **Frei, Alexandra Sarah**
**Frei Patentanwaltsbüro Hedwigsteig 6**
**Postfach 95**
**CH-8029 Zürich (CH)**

## Beschreibung

Die vorliegende Erfindung bezieht sich auf ein Fördersystem mit einer Mehrzahl von Fördervorrichtungen mit je einem Antriebsorgan sowie mit je einer stoss- und zugbetriebsfähigen, ein einziges Trum aufweisenden Transportkette, wobei jede Transportkette mit ihrem einen Endbereich mit dem zugehörigen Antriebsorgan in Wirkverbindung steht und durch dieses über einen Grossteil ihrer Länge hin- und herbewegbar ist, und an ihrem andern Endbereich Mittel zum Fördern einer Last aufweist.

Mit diesem Fördersystem soll mit Hilfe der erfindungsgemässen Ausgestaltung das nachfolgend geschilderte Produkteverteilungsproblem angegangen werden. Die Flächenabdeckung (bspw. in Grossräumen oder in grösseren offenen Geländen) bei der Lieferung eines Produktes von und zu einer zentralen Stelle geschieht idealerweise mittels eines autonomen Fahrzeuges (bspw. ein Wagen mit Eigenantrieb), der die zu fördernde Ware in einer Zentrale aufnimmt und sie auf möglichst kürzestem Weg an einen Zielort hinbringt. Bei einer Flächenabdeckung von geringerem Ausmass (bspw. eine Gaststätte bis Grosskantine) werden die Produkte auch von Personen verteilt, was jedoch ausserordentlich personalintensiv werden kann und damit Probleme eigener Art aufwirft. Das Verteilungsprinzip bleibt sich jedoch gleich, ob es sich um eine Grob- oder um eine Feinverteilung handelt oder ob es sich um eine Verteilung handelt, die direkt von Menschen als Transportmittel ausgeführt wird. Ist es ein Wagen (mit oder ohne eigenen Antrieb), so benützt er die ihm zur Verfügung stehenden Fahrwege, vermeidet unterwegs die zeitlich /örtliche Koinzidenz mit anderen Fahrzeugen (Zusammenstoss) und kommt, leer oder nicht, an den Ausgangsort zurück. In einem solchen allseits bekannten System sind die Hauptvorteile der autonome Antrieb der lastfördernden Mittel und die unbegrenzte Kreuzungsfähigkeit dieser Mittel (Fahrzeuge). Von Nachteil sind die schwierige Ueberwachung der momentanen Position und bei unbemannten Fahrzeugen zudem die sehr aufwendige Führung zum Zielort und wieder zurück. Der letztere Nachteil ist durch Schienenfahrzeuge, mit allen ihren Vor- und Nachteilen, weitgehend behebbar. Doch das Einführen von Schienen schränkt die unbegrenzte Kreuzungsfähigkeit drastisch ein. Abgesehen davon, ist die klassische Art der auf den Boden verlegten Schienen nicht überall einsetzbar.

Aus der FR-A-2 357 444 bzw. der EP-A-0 091 557 sind im weiteren bahngebundene Fördervorrichtungen bekannt, bei welchen eine zug- und stossbetriebsfähige Gliederkette ohne Rücktrum in formschlüssigem Eingriff mit einer Antriebseinrichtung steht, bspw. einem Kettenrad, welche die Kette vorund zurückschiebt. An einem Ende der Kette ist ein oder sind mehrere Aufnahmevorrichtungen befestigt, die zur Aufnahme des Förderguts dienen und das andere Ende ist über die Antriebseinrichtung geführt, derart, dass der überschüssige gleichsam arbeitsfreie Kettenrest frei über diese Antriebseinrichtung in ein Kettendepot laufen kann. Die Kette wird in einem dem Bahnverlauf folgenden Kettenkanal gezogen und geschoben, welcher Kettenkanal vorzugsweise mittig in einer Fahrbahn für die das Fördergut führenden bspw. Wagen verläuft. Diese Fahrbahn erstreckt sich ausgehend von einer Hauptstation, welche zugleich das Antriebsorgan umfasst, zu verschiedenen hintereinander angeordneten Zielstationen.

Zur Lösung des eingangs erwähnten Transportproblems baut nun die hier vorgeschlagene Erfindung auf einer vergleichbaren bahngebundenen Fördervorrichtung auf, wobei aber eine Mehrzahl solcher Fördervorrichtungen zu einem übergeordneten Gesamtfördersystem zusammengefasst werden, um eine (oder mehrere) Zentralstation(en) und mehrere Satellitenstationen beliebiger räumlicher Anordnung fördertechnisch miteinander zu verbinden. Die Fahrbahnen zwischen den Zentralstationen und den Satellitenstationen können streckenweise ineinander übergehen, also gemeinsame Bahnabschnitte bilden, welche mittels Verzweigungen ineinander übergeführt bzw. auseinander herausgeführt werden. Das ganze System ist kreuzungsfrei und weist lediglich Verzweigungen im Sinne von "Weichen" auf. Die Zusammenfassung der mehreren Fördervorrichtungen erfolgt erfindungsgemäss so, dass die Antriebsorgane der einzelnen Fördervorrichtungen nicht im Bereich der Zentralstationen, sondern dezentral, d.h. im Bereich der Satellitenstationen, angeordnet werden. Damit erfolgt eine Trennung zwischen organisatorischer und antriebsmässiger Struktur des Gesamtfördersystems : Organisatorisch stehen die Zentralstationen, bei denen die Fahrbahnen des Systems zusammenlaufen, im Mittelpunkt ; antriebsmässig hingegen, sind die Satellitenstationen autonom.

Somit verläuft eine Transportkette einer einzelnen Bahn, geführt vom Kettenkanal, der entlang der Fahrbahn des Wagens verläuft, von ihrer Ausgangsstation (das ist systemmässig betrachtet ein Satellit und vorrichtungsmässig betrachtet eine Antriebsstation) zur Zentralstation, die auch von anderen gleichartigen Bahnen angelaufen wird. Eine zu dichte sternförmige Anordnung im Bereich der Zentralstation wird durch Baumstrukturen aufgelockert, die mit gemeinsamen Fahrbahnabschnitten, in welche über die Verzweigungen die von den Satelliten kommenden individuellen Bahnabschnitte geführt sind, schliesslich in den zentralen Bereich führen. Mit einer Struktur aus denselben Bahnelementen können auch Satelliten untereinander verbunden werden. Da jeder Satellit mit einer Antriebseinrichtung versehen ist, kann dessen Transportvorrichtung (Transportkette und Wagen) jederzeit in Betrieb gesetzt werden, wobei das Fördergut bis zum ersten, schon belegten gemeinsamen Bahnteil vorgeschoben werden kann, um dort in Warteposition zu bleiben, bis dieser

2

Bahnteil freigegeben wird.

Organisatorisch gesehen ist es sinnvoll, gemeinsame Fahrbahnteilstücke streckenmässig möglichst kurz zu halten und sie auch möglichst nahe am zentralen Bereich anzulegen, da sie gleichzeitig nur eine einzige Bahn führen können. In solch einem zentralen Bereich können ganze Baumstrukturen sternartig zusammenlaufen, sodass von dort aus eine grosse Anzahl von Satelliten bedient werden können, bzw. von einer grossen Anzahl von Satelliten Fördergut eingeholt werden kann.

Um das Fördersystem im Sinne der Erfindung beliebig ausbaufähig zu machen, wird in Baukastenmanier eine Modulbauweise angewendet, bei der Antriebsstationen (Satelliten), Fahrbahnteilstücke und Verzweigungen die wesentlichen Elemente sind. Je nach Einsatzgebiet des Fördersystems, bspw. im Bereich von Menschen, sind noch Fahrbahndurchgänge vorgesehen, die ein Zirkulieren im Bereich der Fahrbahnen erleichtern.

Die wesentlichen Vorteile einer solchen Reziprozität zwischen antriebsmässiger und organisatorischer Struktur sind darin zu sehen, dass die dezentrale Antriebsstruktur zu einer Entlastung der organisatorischen Zentralstationen führt, wobei die Satellitenstationen gleichzeitig einen hohen Autonomiegrad erlangen, welcher in einer erhöhten Flexibilität des Gesamtsystems resultiert. Diese erhöhte Flexibilität zeigt sich nicht nur im weitgehend unabhängigen Betrieb der einzelnen Fördervorrichtungen und der dementsprechend verbesserten Gesamtförderleistung, sondern auch darin, dass ein solches Fördersystem dank weitgehend modularer Bauweise auf einfachste Art nachträglich erweitert bzw. umgebaut werden kann.

Am Beispiel eines Gastronomie-Betriebes wird nun das Verteilungsproblem und das dieses Problem lösende Fördersystem eingehend erklärt. Dieses Beispiel ist besonders günstig, da zu organisatorisch-technischen Betrachung zudem der Aspekt der Arbeitserleichterung für das Personal hinzukommt, ein Aspekt, dem bislang nur mit dem Mittel der Selbstbedienung begegnet wurde.

Die nachfolgenden Figuren sind, bevor sie einzeln aufgeführt werden, zur besseren Uebersicht noch in ihre modularen Gruppierungen zusammengefasst, wobei die :

| | | |
|---|---|---|
| – | Systemübersicht | Fig. 1–3 |
| – | Antriebsstation (Satellit) | Fig. 4–6 |
| – | Fahrbahn | Fig. 7–8 |
| – | Weiche | Fig. 9–11 |
| – | Wagen | Fig. 12–14 |
| – | Durchgang | Fig. 15–17 |

umfassen und die einzelnen Figuren das Folgende zeigen :

Fig. 1 zeigt in einem Grundriss einen solchen Betrieb mit einem Förderanlage in T-Ausführung, mit zwei individuellen und einem gemeinsamen Bahnstück, also zwei Satelliten und ein zentraler Bereich.

Fig. 2 zeigt die Förderanlage stirnseitig in Pfeilrichtung II gemäss Fig.1 gesehen und

Fig. 3 zeigt die Förderanlage von der Seite in Pfeilrichtung III gemäss Fig.1 gesehen.

Fig. 4 zeigt eine Antriebsstation eines Satelliten der Förderanlage im Seitenschnitt ;

Fig. 5 zeigt die Antriebsstation im Querschnitt von oben gesehen und

Fig. 6 zeigt einen Schnitt entlang VI-VI gemäss Fig. 5.

Fig. 7 zeigt einen Querschnitt durch ein Fahrbahnstück des Fördersystems und

Fig. 8 zeigt ein Fahrbahnteilstück von oben gesehen,

Fig. 9 zeigt eine Ausführungsform einer Fahrbahnverzweigung im Sinne einer Weiche, an welcher zwei individuelle Fahrbahnstücke zu einem gemeinsamen Fahrbahnstück zusammenlaufen.

Fig.10 zeigt einen Querschnitt der Weiche durch X-X gemäss Figur 9 und

Fig.11 zeigt eine Ansicht der Weiche in Pfeilrichtung XI gemäss Fig. 9 gesehen.

Fig.12 zeigt teilweise geschnitten die seitliche Ansicht an eine Ausführungsform eines Transportwagens und

Fig.13 dasselbe wie Figur 12 in Querrichtung und

Fig.14 zeigt den Transportwagen, der mit einem tablettförmigen Aufsatz versehen ist, von oben gesehen.

Fig.15 zeigt, teilweise geschnitten eine Ausführungsform eines Durchganges durch die Fahrbahn, bei welchem ein Fahrbahnstück hochgeklappt werden kann und

Fig.16 zeigt den Querschnitt durch XVI-XVI gemäss Fig.15 und schliesslich zeigt

Fig.17 noch die Ansicht des Durchganges in Pfeilrichtung XVII gemäss Figur 15.

## Systemübersicht

Fig. 1-3

In einem Gastronomiebetrieb ist die Küche die zentrale Ausgabestelle und die Tische der Gäste sind die Zielorte, zu den die bestellten Mahlzeiten gefördert und von denen das gebrauchte Geschirr zurückgefördert wird. In der Regel wird diese Förderung vom Servierpersonal oder bei Selbstbedienung von den Gästen ausgeführt. Das hier diskutierte (mechanische) Fördersystem zwischen Küche und Gästeraum, weist die einfachste Baumstruktur, nämlich eine mit lediglich zwei Aesten, auf.

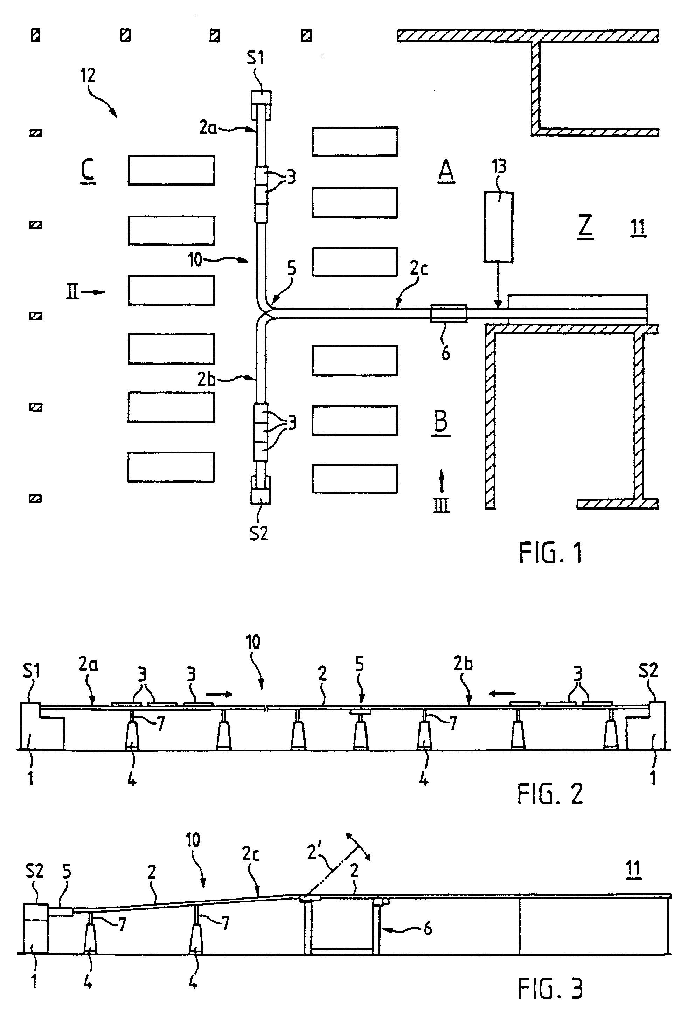

Die Figuren 1, 2 und 3 zeigen ein Fördersystem 10 mit einer Verzweigung 5, welches einen Küchenbereich 11 (Zentrale Z) mit einem Gästebereich 12 mit den Satelliten S1 und S2 verbindet. Diese Ausführung der Verbindung zwischen Zentrale und Satelliten kann man ihrer symmetrischen Form gemäss T-Bahn nennen. Es ist klar, dass das hier diskutierte System mit weiteren Verzweigungen, symmetrisch oder nicht, zu einem komplexeren System ausgebaut werden kann, doch ist in dieser Diskussion der gezeigte einfache Aufwand völlig ausreichend, um die Erfindung mit allen ihren wesentlichen Elementen eingehend und vor allen Dingen in Bezug auf ihre Vielseitigkeit zu diskutieren. So zeigt Figur 1 eine solche T-struktur von oben gesehen und die Figuren 2 und 3 dieselbe T-Struktur von der Stirnseite, sowie von der Seite gesehen.

Im Küchenbereich 11 steht ein Steuerpult 13, von welchem aus die Verteilung der bestellten Gerichte, Getränke etc. und der Rückruf des gebrauchten Geschirrs gesteuert werden kann. Dies erfordert eine gewisse Uebersicht über das Geschehen, was bei diesem Beispiel eines verhältnismässig kleinen Betriebes auch gewährleistet werden kann. Sofern diese nötige Uebersicht von einem zentralen Punkt aus nicht mehr möglich ist, empfiehlt sich neben einem zentralen Steuerpult auch Steuermittel an den Satelliten vorzusehen, um von dort aus einen Hol- oder Bringvorgang auszulösen. Von den Satelliten aus kann dann, bei Einsatz von Servierpersonal, eine Feinverteilung einsetzen, das heisst, das Bringen der Mahlzeiten an die in der näheren Umgebung stehenden Tische. Auf diese Weise kann das eingesetzte Personal sehr stark entlastet werden, es gibt kein Gedränge an der Küchentür und die Prioritätsfrage löst sich maschinell.

Es werden sich bei Hochbetrieb Warteschlangen bilden, in die jedoch keine Menschen involviert sind. An jeder Verzweigungsstelle wird automatisch ein Wartevorgang ausgelöst, sobald einer der gemeinsamen Fahrbahnstücke besetzt ist und bei Freigabe setzt der Hol- oder Bringvorgang wieder ein. Aus sicherheitstechnischen Gründen sind an allen Verzweigungsstellen ohnehin Sensoren zu empfehlen, welche verhindern dass bei besetztem, gemeinsamem Fahrbahnteilstück eine andere Bahn auf das belegte Bahnstück einzufahren versucht.

Das System weist gemäss Figur 1 von oben gesehen zwei Bahnen mit einem gemeinsamen Bahnteil auf. Eine Bahn führt vom Satelliten S1 über ein individuelles Bahnteilstück 2a und über ein gemeinsames Bahnteilstück 2c zum zentralen Bereich Z. Eine andere Bahn führt von einem anderen Satelliten S2 über ein individuelles Bahnteilstück 2b und über das gemeinsame Bahnteilstück 2c zum zentralen Bereich Z. Die beiden individuellen Bahnteilstücke 2a und 2b werden über eine weichenartige Verzweigung 5 in das gemeinsame Bahnteilstück 2c geführt.

In Figur 2 ist dasselbe System aus der Pfeilrichtung II gemäss Figur 1 dargestellt. In der Gastronomie ist es angebracht, die ankommenden Speisen, also das Fördergut, so ungefähr in Tischhöhe zu transportieren, sodass die Fahrbahn durch eine Anzahl Ständer 4 in eine Höhe von 70 bis 75 cm gelegt wird. Man erkennt auf beiden Seiten der Figur, welche die beiden Aeste 2a und 2b zeigt, die endständigen Satelliten S1 und S2, sowie in Tablettform angedeutet, je drei Wagen 3. Diese sind am einen Ende einer hier nicht dargestellten Transportkette befestigt, deren anderes Ende über ein hier ebenfalls nicht dargestelltes Antriebsrad verläuft und als "Kettenschwanz" in einem im Satelliten angeordneten Stauraum abgelegt ist. Wie hier mit zwei Richtungspfeilen dargestellt, werden die Förder-Tabletts in Richtung Küche geschoben, um die bestellten Speisen zu holen und-/oder schmutziges Geschirr zurückzubringen. Beide Bahnen können natürlich nicht gleichzeitig die Verzweigung 5 und das gemeinsame Fahrbahnstück 2c benützen, sodass diese Operationen, das sind Hol- oder Bringvorgänge, nacheinander ausgeführt werden müssen.

Figur 3 zeigt das System aus der Pfeilrichtung III gemäss Figur 1. Wenn es nun angebracht ist, die ankommenden Speisen, also das Fördergut, so ungefähr in Tischhöhe zu transportieren, so ist diese Höhe als Arbeitshöhe in der Küche unzureichend, sodass die Fahrbahn durch eine Anzahl Ständer 4 von einer Höhe von 70 bis 75 sukzessive auf eine Arbeitshöhe von 90 bis 100 cm angehoben wird. Man erkennt auf der linken Seite der Figur, den Satelliten S2, sowie die "Weiche" 5 und davon ausgehend das gemeinsame Bahnstück 2c, welches in die Küche führt und dort endet. Im Bereich zwischen Küche und Gastraum ist ein Durchgang 6 vorgesehen, um den Zugang zur Küche und/oder den durch den Bahnverlauf aufgeteilten Versorgungsfelder A, B, C zu erleichtern. Solche Durchgänge werden überall dort angeordnet, wo es organisatorisch wünschbar ist, denn im Falle einer Transporthöhe von rund 75 cm bilden die Bahnen eine Art Abschrankung per se. Dies ist dort nicht der Fall, wo die Bahnhöhe über Kopf (bspw. in 2 Meter Höhe) angeordnet ist. Doch im Gastronomiesektor wird eine Höhe, wie sie in der Zeichnung angegeben ist, bevorzugt werden. Darum sei an dieser Stelle noch erwähnt, dass das System gemäss Erfindung an keine Transporthöhe oder an einen horizontalen Transportverlauf gebunden ist. Auch der Verlauf eines Fahrbahnstücks zwischen zwei verschiedenen Höhenlagen (Sitzhöhe, Stehhöhe) ist lediglich durch den Gebrauch bestimmt.

So wird der Anstieg von Tischhöhe (Sitzhöhe) auf Steharbeitshöhe, das sind ca. 20 cm Höhenunterschied, darum sukzessive und nur leicht ansteigen dürfen, da freistehende schlanke Gegenstände wie bspw. Flaschen transportiert werden müssen. Hier ist noch erwähnenswert, dass ausserdem die Transportbewegung absolut ruckfrei erfolgen muss, ganz abgesehen von den anwendbaren (moderaten) Geschwindigkeitsverzögerungswerten.

An diesem einfachen Anwendungsbeispiel aus dem Gastronomiesektor sind nun alle wesentlichen Elemente des Fördersystems aufgeführt, nämlich, die Satelliten, die individuellen Fahrbahnstücke, die gemeinsamen Fahrbahnstücke, die zusammenführenden Verzweigungen (Weichen) und sofern nötig, den Durchgang mit dem hochklappbaren Fahrbahnstück 2'. Die zugrunde liegende Idee des dezentralen "Tentakelsystems", das zu einem Fördersystem zusammengebaut ist, kommt auch hier, bei einem System mit nur zwei Tentakeln zum Ausdruck.

Antriebsstation

Fig. 4-6

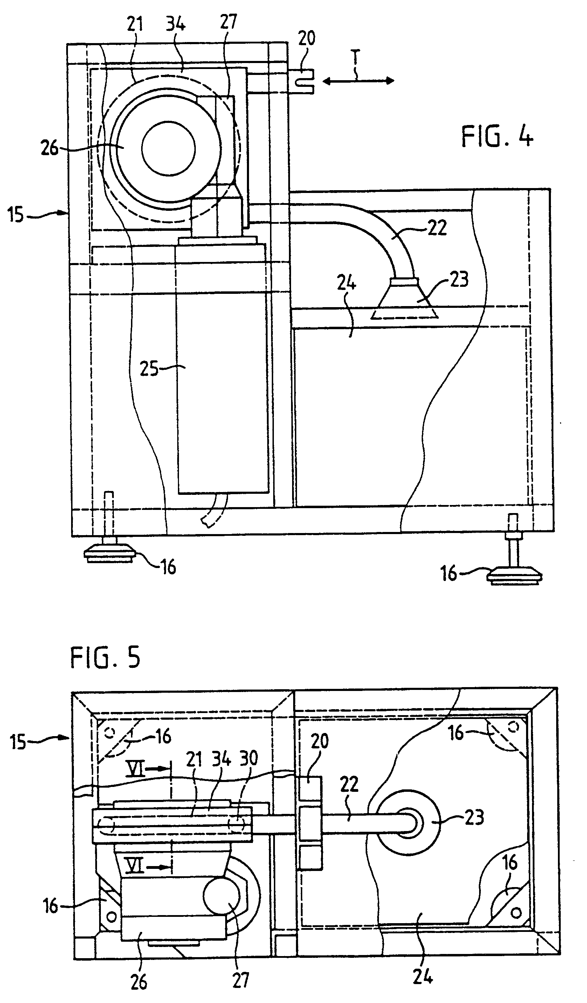

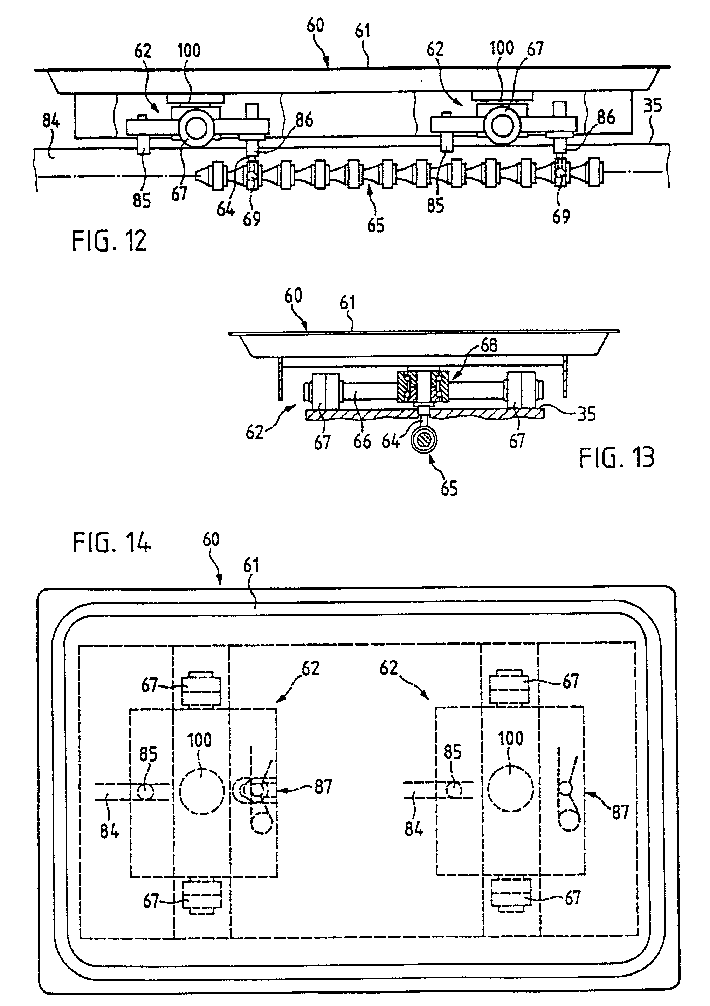

Die Figuren 4, 5 und 6 zeigen ein Ausführungsbeispiel einer Antriebsstation, die im diskutierten Fördersystem die Satelliten verkörpern. Figur 4 zeigt einen Seitenschnitt durch die Antriebs-station. Die durch einen Doppelpfeil T symbolisierte Transportkette (siehe auch die bevorzugte Transportkette 65 in Figur 12) wird durch die Einmündung 20 für die Transportkette in das Gehäuse 15 eingeführt und umschlingt ein Kettenantriebsrad 21, welches die Transportkette zugleich umlenkt, und in einem Kettenkanal 22 weitergeführt, läuft die Transportkette schliesslich in einen Ketten stauraum 24, wo sie sich mehr oder weniger als Spirale geordnet selber ablegt. Die spiralig gerungene Ordnung der Kette, die es erlaubt, die Transportkette ohne spezielle Führungsmittel zwanglos wieder aufzunehmen, wird durch einen Kettenauslauf-/einlauftrichter 23 unterstützt. Angetrieben wird das Kettenantriebsrad 21 von einem Motor 25, der über ein Getriebe 26 das Kettenantriebsrad 21 antreibt. Der Motor wird seinerseits entweder aus einer Zentrale gesteuert und/oder am Satelliten selbst vor- und rückwärts-, sowie ein- und ausgeschaltet. Schliesslich sind am Gehäuse 15, das ein Bodenstandmodell ist, verstellbare Füsse 16 zum Ausrichten der Antriebsstation in Bezug zur Fahrbahn, die direkt an der Einmündung 20 für die Transportkette angekoppelt ist, eingezeichnet.

Figur 5 zeigt dieselbe Station im Querschnitt von oben gesehen, in welchem die besprochenen Bauelemente aus einer anderen Sicht gezeigt sind. Sehr schön sichtbar ist der Kettenauslauftrichter 23, der Getriebeblock des Getriebes 26 und die vier Standbeine 16. Es ist nochmals zu bemerken, dass die Antriebsstation (Satellit) zusammen mit der Fahrbahn und der Transportkette mit dem daran befestigten Wagen eine eigenständige Bahn darstellt. Vom Satelliten aus wird ein "Arbeitstentakel" wie ein langer ausziehbarer und flexibler Arm zu einem Zielort "ausgefahren", um ein Fördergut zu bringen und/oder zu holen. Von der Zentrale aus gesehen, wird einer oder mehrere Satelliten von möglicherweise einer grösseren Anzahl solcher aktiviert, die Fördertätigkeit aufzunehmen. Der Bahnbetrieb zwischen Satellit und Zentrale oder zwischen Satelliten, ist durch ein Fahrbahnnetzwerk, das modular ausbaubar ist, geordnet.

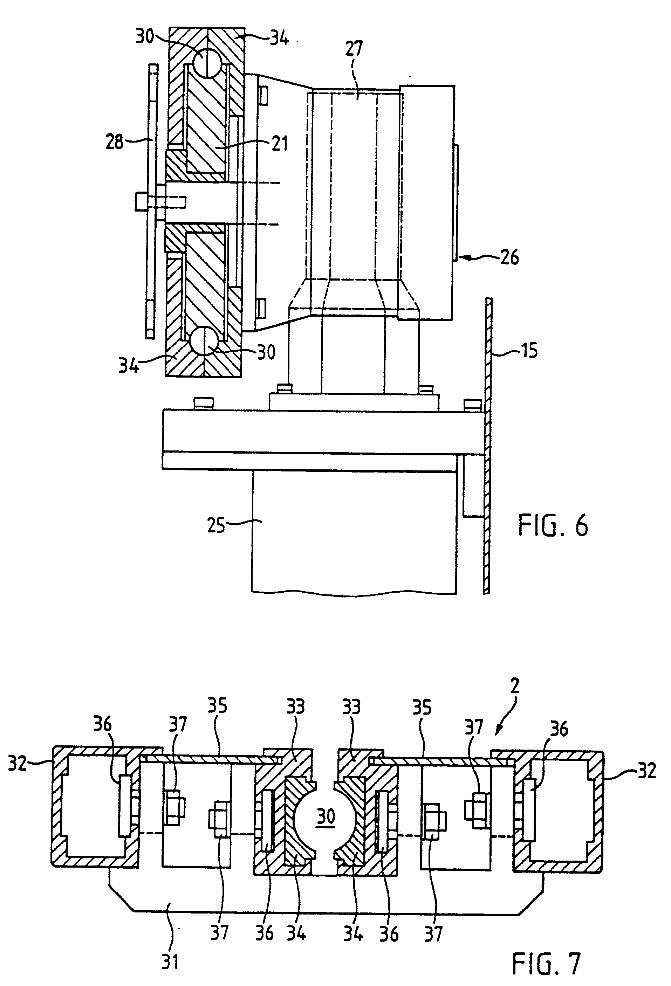

Figur 6 zeigt im Detail das Kettenantriebsrad 21, mit einer Führung 34 der Transportkette, die durch passende Ausnehmungen für die Kettenglieder einen einwandfreien Formschluss zwischen Rad und Kette gewährt. Die Transportkette 65 ist eine Gliederkette mit sphärischen Kalottenteilen, mit denen durch entsprechende kalottenförmige Vertiefungen im Kettenantriebsrad 21, ein einwandfreier Formschluss erzielt wird. Da die Kette kein Rücktrum aufweist und auch nicht gespannt werden kann, muss sie in einem "Führungskanal" so eingefangen sein, dass sie sich nur in einer Dimension verschieben kann (von der möglichen Drehung um ihre eigene Längsachse abgesehen). Entlang dem Umfang des Kettenantriebsrades 21 verläuft ein durch eine Transportkettenführung 34 gebildeter Transportkettenkanal 30. Der Antrieb des Kettenantriebsrades 21 erfolgt vorzugsweise über ein Schneckengetriebe 27, wobei für andere Anwendungszwecke auch andere Antriebsarten gewählt werden können. Schliesslich ist auf der Gegenseite des Getriebes 26 am Kettenantriebsrad 21 ein Weggeber 28 angekoppelt, mit dem die momentane Position (ausgefahrene Kettenlänge) des am anderen Kettenende angehängten Wagens festgestellt werden kann.

5

## Fahrbahn

### Fig. 7-8

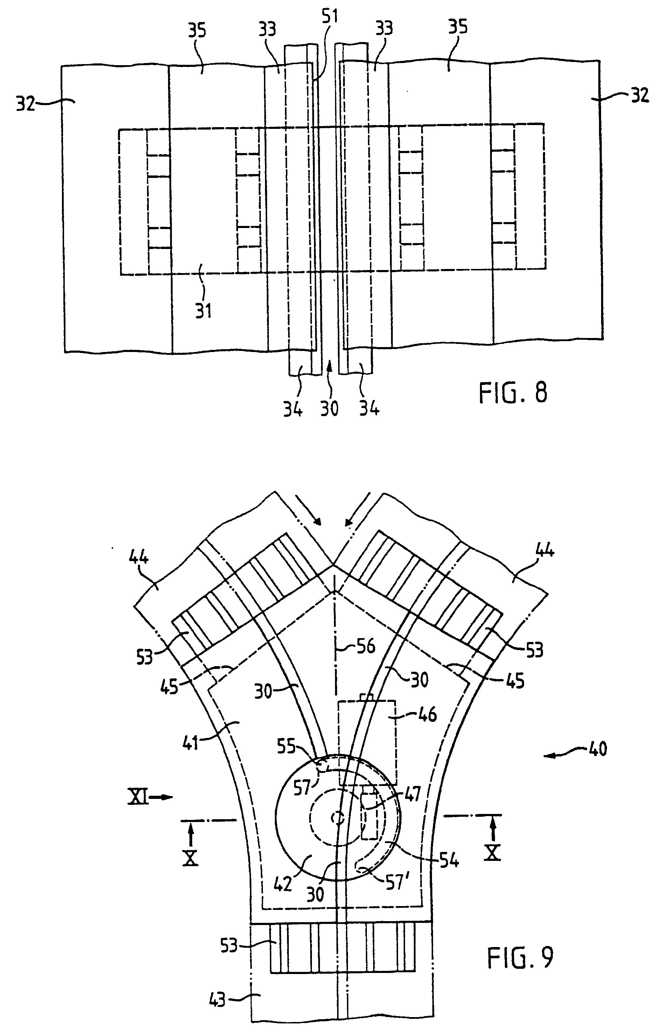

Die Figuren 7 und 8 zeigen eine Ausführungsform der Fahrbahn mit integrierter Führung für eine Transportkette. Im Querschnitt gemäss Figur 7 findet man die wesentlichsten Teile der Fahrbahn, wie sie in diesem System verwendet wird. Die Fahrbahn ist modular ausgestaltet ; es sind gerade Stücke verschiedener Längen, sowie gebogene Stücke verschiedener Winkel, jedoch vorzugsweise von gleichem Radius. Die wesentlichsten Teile sind folgende : ein profilförmiger Trägerkörper 31, der an beiden Seiten eine äussere Haltevorrichtung 32 (vorzugsweise ein Hohlprofil) und im Mittelteil eine innere Haltevorrichtung 33 (ein Halbprofil) aufweist. Diese Haltevorrichtungen sind mit einer äusseren Befestigung 36 und einer inneren Befestigung 37 am Trägerkörper 31 festgemacht. In der inneren Haltevorrichtung 33, hier vorzugsweise unterhalb der Fahrbahn 35 angeordnet, ist eine Transportkettenführung 34 angeordnet, welche den Transportkettenkanal 30 bildet. Die Anordnung, bei der die Transportkette unterhalb der Fahrbahn verläuft, ist u.a. bezüglich der Drehmomentauswirkung zwischen der Transportkette und dem auf der Fahrbahn rollenden Wagen eine bevorzugte Ausführungsform Von der äusseren Haltevorrichtung 32 und der inneren Haltevorrichtung 33 wird die Fahrbahn 35 gehalten, sodass diese so immer es nötig ist, als auswechselbarer Bauteil leicht ausgetauscht werden kann. Ebenso leicht austauschbar sind die Transportkettenführungen 34, die vorzugsweise aus einem eloxierten, oberflächenteflonisierten Aluminium hergestellt sind, um die Gleitreibung zwischen Kette und Kanal gleichmässig klein und die Haftreibung minimalst zu halten, sodass ein völlig ruckfreier Betrieb ermöglicht wird. Der Trägerkörper 31 bildet schliesslich den oberen Abschluss der Fahrbahnstützen 7. Die bevorzugte Anordnung der Transportkette zur Fahrbahn ist diejenige, in der die Transportkette unterhalb der Fahrbahn liegt. Die bietet Vorteile im Bereich einer Verzweigung, weil dadurch der gesamte Weichenkörper oberhalb der Fahrbahn frei von Vorrichtungsteilen sein kann und der über die Fahrbahn der Weiche geschobene Transportwagen nicht an vorrichtungsbedingten Hindernissen vorbeigeschoben werden muss. Der damit gewonnene Freiheitsbereich kann für die Gestaltung des Wagens ausgenützt werden.

In Figur 8, in welcher ein Fahrbahnstück von oben gesehen dargestellt ist, sind die relativen Ausmasse des Trägerkörpers 31 gestrichelt dargestellt. Gut sichtbar ist der Transportkettenkanal 30 und die später noch zu diskutierenden Führungsflächen 51.

## Weiche

### Fig. 9-11

Die Figuren 9, 10 und 11 zeigen eine Ausführungsform einer Vorrichtung zum Verzweigen der Fahrbahn. Sie wird in der Folge Weiche genannt, obschon dieser Begriff nicht völlig zutrifft, da eine Weiche in der Regel verschwenkt wird, während die vorliegende Vorrichtung Drehungen ausführt.

Gemäss Figur 9 erkennt man an dieser Weiche 40 von oben gesehen eine Weichenplatte 41, welche einerseits die Funktion der beiden ineinanderlaufenden Fahrbahnen übernimmt und andererseits ein fugenlos umfasstes Drehstück 42 umschliesst. Die beiden individuellen Bahnstücke 44, sowie das gemeinsame Bahnstück 43 schliessen unterhalb der Weichenplatte 41, verbunden durch Uebergangsstücke 53, an einen Stoss 45 für die Fahrbahnen an. Gestrichelt eingezeichnet sind noch ein Weichenantrieb 46 und ein Umlenkgetriebe 47 zum Antrieb des Drehstücks 42.

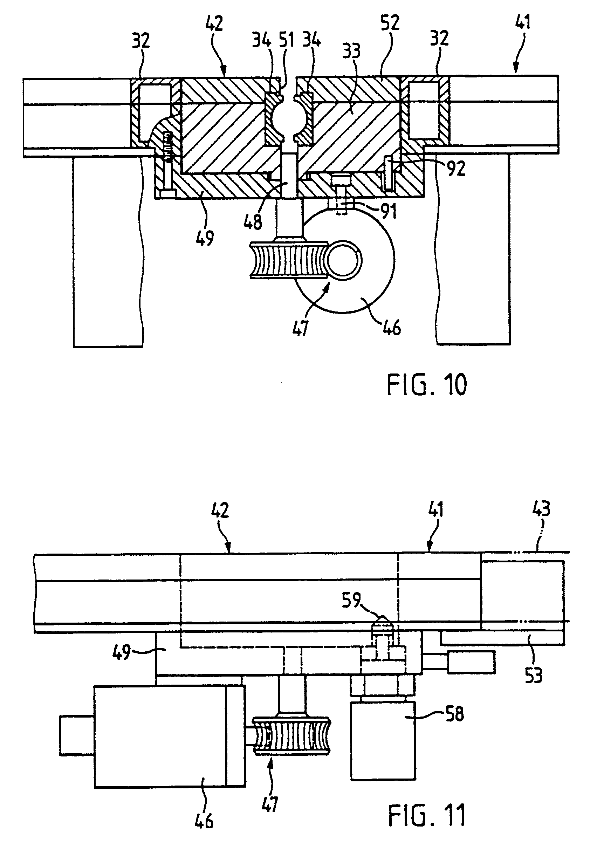

Figur 10 zeigt im Schnitt entlang X-X in Fig. 9 den Weichenkörper, der in ähnlicher Weise zusammengestellt ist, wie dies im Zusammenhang mit der Fahrbahn schon beschrieben wurde. In der Weichenplatte 41 ist die äussere Haltevorrichtung 32 mit einem Trägerkörper 49 verschraubt, durch welchen die Drehachse 48 der Weiche geführt ist. An dieser Drehachse 48 ist die innere Haltevorrichtung 33 mit der Transportkettenführung 34 drehbar befestigt. Die Transportkettenführung 34 besteht aus zwei Halbprofilen, die so voneinander beabstandet sind, dass sie die Transportkette 65, die einen kreisrunden Querschnitt aufweist (siehe auch Figuren 12 und 13) und an einem der Kettenglieder einen Befestigungsbolzen zum Fixieren des Wagens trägt, so umschliesst, dass dieser Befestigungsbolzen durch den oberen Spalt hindurchtreten und in diesem entlang bewegt werden kann. Zur Führung des Transportmittels (Wagen) ist ein Führungsbolzen vorgesehen, welcher in der Abdeckplatte 52 des Drehstücks 42 angeordnet ist und dafür vorgesehene Führungsflächen aufweist, wovon eine Führungsfläche mit der Nummer 51 bezeichnet ist. Der Antriebsteil 46 ist mittels Befestigungsschrauben 91 am Trägerkörper 49 befestigt (hier nur eine sichtbar). Eine Einrichtung 92 dient zur Positionsüberwachung des Drehstückes 42, welche hier mechanisch gelöst ist, nämlich durch einen Stift im unteren Bereich des Drehteils 42, der in einer Nute im Trägerkörper 49 verläuft.

In der seitlichen Ansicht von Figur 11 erkennt man die Anordnung des Motors 46 und des Umlenkgetriebes 47. Ebenfalls gut sichtbar ist eines der Ansatzstücke für das gemeinsame Bahnstück 43. Diese Ansatzstücke sind als Zwischenstücke ausgebildet und verbinden die Fahrbahnstücke mit der Weiche. Ferner ist hier eine elektromagnetische Positioniervorrichtung 58 dargestellt, die über einen Positionierstift 59 die Drehscheibe 42 exakt so positioniert, dass die Transportkettenführungen 34 und damit die Transportkettenkanäle genau fluchten. Um eine selbstzentrierende Wirkung zu erhalten ist der Positionierstift 59 am oberen Ende kegelförmig ausgestaltet, welcher Kegel in eine darüber liegende Ausnehmung in der Drehscheibe eingeschoben wird. Das Ein- und Ausschieben des Zentrierstiftes 59 geschieht hier über die elektromagnetischen Mittel 58, die auf einfache Weise schaltbar sind.

Diese Weiche funktioniert folgendermassen :

Wie oben schon im Zusammenhang mit der Beschreibung der Verzweigungen erwähnt, funktioniert diese Verzweigung nicht wie eine Weiche sondern wie eine Drehscheibe. Das Problem liegt hier darin, dass nicht wie bei einer Weiche eine Umlenkung einer Führungsfläche (Radkranz), sondern die Umlenkung eines ganzen Kettenkanalteiles durchzuführen ist. Zudem ist dieser Kettenkanalteil gebogen und muss gebogene Kettenkanalteile miteinander verbinden. Dazu wird die Verzweigung, wiederum im Gegensatz zu einer üblichen Weiche, symmetrisch ausgestaltet und die so gebildete Symmetrie ausgenützt.

Eine Symmetrieebene 56 (es kann in anderen Ausführungsformen auch eine Symmetrieachse sein) teilt die Weiche in zwei symmetrische Fahrbahnteile. Das Drehstück 42 mit dem integrierten Transportkettenkanal 30 ist so in diese Symmetrie eingeordnet, dass der Transportkettenkanalteil des gemeinsames Bahnstückes 43 durch diese Symmetrieebene 56 geteilt ist und die individuellen Bahnstücke 44 sich daran spiegeln. Bei einer solchen Anordnung sind zwei Manipulationen zur Umstellung der Verzweigung möglich : erstens eine Drehung aus der Ebene heraus auf die andere Seite der Spiegelebene und zweitens eine Drehung in der Ebene um 180°, also eine Halbdrehung, die einer Spiegelung entspricht. Diese letztere Manipulation ist im diskutierten Ausführungsbeispiel realisiert.

Im Drehstück 42 oder in der inneren Haltevorrichtung 33 ist eine Nut 54 eingelassen, in die ein Anschlagsbolzen 55 hineinragt. Ein erster Anschlag 57 und ein zweiter Anschlag 57' begrenzen die Drehung des Drehstückes 42 so, dass die zu verbindenden Transportkettenkanalteile genau fluchten. Dies wird bewerkstelligt durch einen Weichenantrieb 46, der über eine Umlenkgetriebe 47 eine Drehachse 48 antreibt. Diese Art der Umlenkung ist besonders unfallsicher, da ein Einklemmen einer sich darauf abstützenden Hand praktisch unmöglich ist. Dies ist mit ein Punkt für die Ausgestaltung einer Verzweigung in der diskutierten Form.

## Wagen

### Fig. 12-14

Die Figuren 12, 13 und 14 zeigen eine Ausführungsform eines Fördermittels, hier ist es ein kleiner Wagen mit einem tablettförmigen Aufbau zur Aufnahme des Fördergutes, hier Speisen, Getränke und leeres Geschirr.

Diese Ausführungsform, insbesondere der tablettförmige Aufbau ist natürlich spezifisch für den Gebrauch in einem Gastronomiebetrieb ausgestaltet. Jedoch können die an der Transportkette 65 angeordneten, um eine vertikale Achse 100 drehbaren Rollenschemel 62 für beinahe jeden Betriebsfall oder für jede Art Anwendung verwendet werden. Figur 12 zeigt den Wagen 60 von der Seite gesehen mit einem Tablett-Aufsatz 61 auf zwei Rollenschemel 62 montiert. Beide Rollenschemel müssen schwenkbar sein, damit der Wagen ohne zu Rucken und zu Schieben eine Kurve durchlaufen kann. Jeder Rollenschemel 62 weist auf einer Rollenachse 66 zwei Rollen 67 auf (hier sind es Doppelrollen) und er ist nebst der Fixierung am Tablett-Aufsatz 61 noch über eine Transportkettenbefestigung 69 an der Transportkette 65 befestigt. Diese Transportkette ist eine für Zug- und Stossbetrieb einsetzbare Gliederkette, wie sie bspw. im Schweizer-Patent Nr. 538'065 beschrieben ist. Am Rollenschemel 62 ist ausserdem in ungefähr gleichem Abstand zum Drehlager 68 (Achse), jedoch entgegengerichtet ein Führungsstift 85 angeordnet, der in einem Führungsschlitz 84 des Transportkettenkanales 30 läuft. Er gleitet an der Führungsfläche 51 entlang (Fig. 10), gleich wie das Achslager 86, welche beide zusammen dem Rollenschemel 62 die definierte Ausrichtung entlang dem Transportkettenkanal 30 aufzwingen.

Figur 13 zeigt im Schnitt die andere Ansicht des Rollenschemels 62 mit den Rollen 67 an einer Rollenachse 66, drehbar angebracht an einem Drehlager 68, dessen Bolzen 64 mit einer Transportkettenbefestigung 69 fest verbunden ist.

Figur 14 zeigt noch eine praktische Klemmvorrichtung 87, mit welcher ein Tablett-Aufsatz 61, der mit den beiden Rollenschemeln 62 fest verbunden ist, von der Transportkette 65 mit einem einfachen Handgriff zu lösen und ebenso leicht wieder anzukoppeln. Auf diese Weise kann ein bspw, unbefriedigend laufender Wagen auch vom Servierpersonal ohne Werkzeug schnell ausgetauscht werden.

## Durchgang

Fig. 15-17

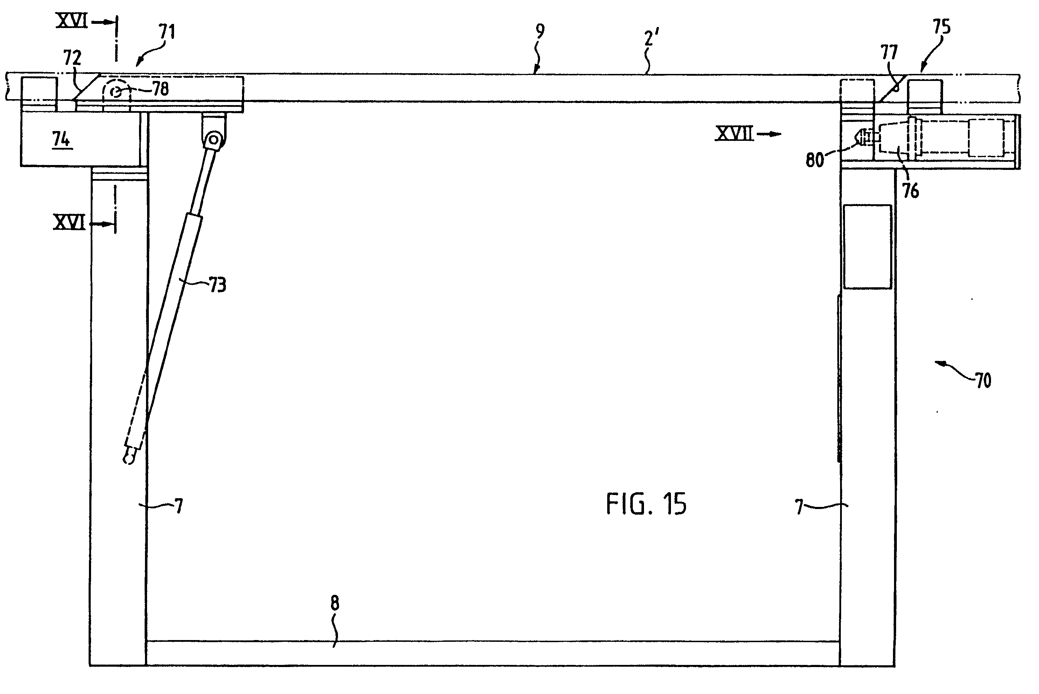

Die Figuren 15, 16 und 17 zeigen eine Ausführungsform eines Durchganges, der das Begehen eines mit dem Fördersystem gemäss Erfindung beschickten Gebietes, hier der Gastraum eines Gastronomiebetriebes mit der Unterteilung A, B und C.

Ein Durchgang, wie er mit der Zahl 6 in Figur 1 und mit der Zahl 70 in Figur 15 bezeichnet ist, besteht im wesentlichen aus zwei Stützen 7 und dazwischen am Boden entlang ein Kabeltunnel 8. Ferner, über die Stützen 7 geführt, ein hochklappbarer Fahrbahnteil 9, der an einem Scharnier des Durchgangs 70 drehbar angeordnet ist.

Wie schon weiter oben ausgeführt, verlaufen die Fahrbahnen ungefähr in Tischhöhe durch den Gästebereich und "strukturieren" auf diese Weise den Gastraum. Im hier gezeigten Beispiel verläuft das gemeinsame Bahnstück vom Küchenbereich in den Gastraum bis zur Verzweigung. Nach der Verzweigung laufen die beiden individuellen Bahnstücke in entgegengesetzter Richtung auseinander. Diese T-Form wird am besten so in die Ordnung der Tische eingefügt, dass beidseitig der T-Arme Tische gestellt werden (siehe Fig.1) und der T-Balken für den Zugang zu den Tischen freigehalten wird. Um ungehindert in beide Zonen auf jeder Seite des T-Balkens zu gelangen, ist im gemeinsamen Bahnstück ein Durchgang nötig, wie hiervon ein Ausführungsbeispiel beschrieben wird. Es ist klar, dass bei komplexeren Strukturen des Fördersystems entsprechend mehr Durchgänge eingeplant werden müssen.

Ein solcher Durchgang wird vorteilhafterweise aufklappbar ausgestaltet. Auf diese Weise wird zum Oeffnen des Durchgangs der Raum in Richtung der Höhe ausgenützt, wo ohnehin mehr Platz vorhanden ist als darunter. Damit dieser Vorgang einfach, sicher und komfortabel von sich gehen kann, wird das Gewicht des zu verschwenkenden Fahrbahnstücks bspw. mittels einer Gasdruckfeder 73 so kompensiert, dass das Aufklappen nur wenig Kraft erfordert.

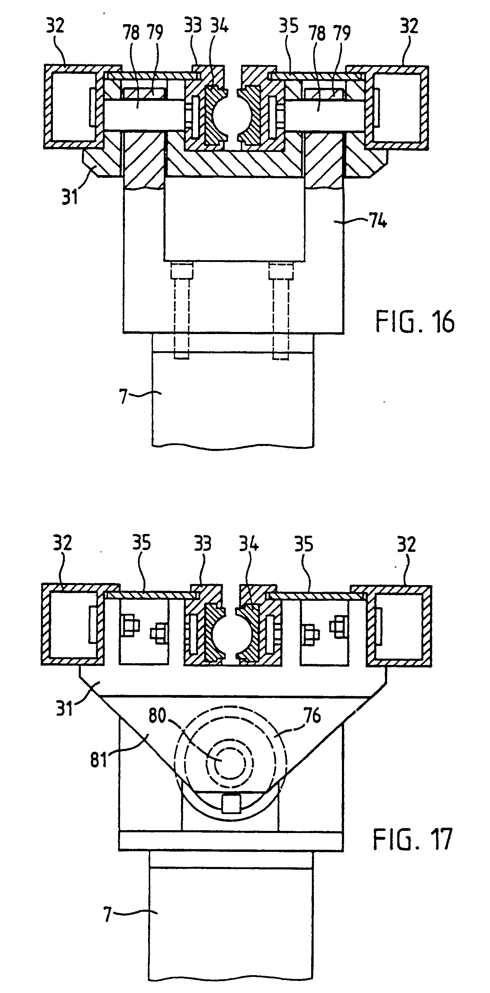

Figur 15 zeigt den Durchgang von vorne. Die beiden Hauptstützen 7 sind am Boden über einen Kabeltunnel 8 miteinander verbunden. Eine der beiden Stützen trägt das Scharnier 71, um welches das Fahrbahnstück geschwenkt wird. Die andere Stütze weist eine vorzugsweise elektromagnetisch betätigbare (für die Sicherheitsverriegelung) Verschlussvorrichtung 75 mit einer Sicherheitsklinke 76 zum Ein- und Ausschalten der Stromzuführung. Es muss natürlich sichergestellt werden, dass bei einem offengeklappten Durchgang jeglicher Transport in diesem Abschnitt stillgelegt ist und dass bei "besetzter" Fahrbahn sich der zu öffnende Fahrbahnteil nicht hochklappen lässt. Dazu dienen Einrichtungen und Massnahmen, auf welche im Zusammenhang mit den beiden Figuren 16 und 17, welche einen Schnitt XVI-XVI durch den Scharnierteil und eine Ansicht XVII an den Verschlussteil zeigt.

In Figur 16 erkennt man im Schnitt durch die Fahrbahn und durch den Scharnierteil die Scharnierachse 78, die in einem Achslager 79 drehbar gelagert ist. Das Achslager 79 ist vorteilhafterweise gleich im Verbindungsteil 74 angeordnet, der hier in eine Ausnehmung im Trägerkörper 31 des hochklappbaren Fahrbahnteils eingelassen ist. Der Verbindungsteil 74 ist auf der einen Seite auf der Stütze 7 festgeschraubt und auf der anderen Seite an der Fahrbahn. Auf diese Weise wird eine ausreichend feste Verbindung zwischen den festen und den beweglichen Fahrbahnteilen geschaffen. Die Schräge 72 ist so gestaltet, dass eine Schwenkung ohne Verklemmen möglich ist, wobei man darauf achtet, dass die damit erzeugte Fuge so schmal als möglich gehalten wird. Dies kann damit erreicht werden, dass die Scharnierlagerung so nahe als möglich unter die Fahrbahn und an die Fuge gelegt wird. Erfahrungsgemäss bleibt die Erschütterung des Wagens beim Ueberrollen der Fuge vernachlässig bar, insbesondere dann, wenn der Raddurchmesser ausreichend gross ist.

In der Ansicht von Figur 17 sieht man die zweite Uebergangsstelle des aufklappbaren Fahrbahnteils zur Fahrbahn. Diese Uebergangsstelle kann durch die in Figur 15 gezeigten Auflageschrägen 77 praktisch fugenlos ausgeführt werden. Wesentlich an dieser Stelle des Systems ist die Verriegelungs und/oder Schaltvorrichtung zur Gewährleistung der Sicherheit, wie dies weiter oben schon dargetan wurde. Zusammen mit der seitlichen Ansicht von Figur 15 sieht man einen elektromagnetisch betätigbaren Riegel 80, der sich in einen Klinkenteil 81 ein- und ausschieben lässt. Die Ver- und Entriegelung kann einerseits aktiv über das elektromagnetische Mittel geschehen andererseits kann derselbe Riegel 80 lageabhängig so eingerichtet werden, dass er in bestimmten Positionen den Stromkreis für den Streckenteil mit dem integrierten Durchgang öffnet und ihn nur dann wieder schliesst, wenn der Riegel in seiner korrekten Lage ist. Diese korrekte Lage des Riegels 80 wird durch den Klinkenteil 81 bewirkt, nämlich so, dass wenn man durch Hochklappen des Fahrbahnteils den Riegel ausklinkt, dieser in die "Ausschaltposition" übergeht und durch Herunterklappen und Einklinken wieder in die "Einschaltlage" gebracht wird. Für die Verriegelung der Fahrbahn wird der Riegel 80 durch die elektromagnetische Einrichtung in eine Verriegelungslage (bspw, tiefer in die Klinkenausnehmung)geschoben, sodass der hochklappbare Fahrbahnteil mechanisch verriegelt ist. Dies ist eine von mehreren möglichen Aus-

EP 0 316 273 B1

führungsformen und dient zur Gewährleistung der Personen- aber auch der Betriebssicherheit, da dies ein willkürlich manipulierbarer Systemteil ist und dadurch entsprechend abgesichert werden muss. Wie erwähnt, wird dieser Durchgang hauptsächlich für den Personenverkehr gebraucht werden, es ist aber auch möglich, solche Durchgänge, ähnlich den automatischen Barrieren, für einen reine Warenverkehr zu verwenden. In diesem Fall werden die Durchgänge ferngesteuert und Massnahmen zur Begegnung von willkürlichen Eingriffen können weggelassen werden.

## Ansprüche

1. Fördersystem mit einer Mehrzahl von Fördervorrichtungen mit je einem Antriebsorgan sowie mit je einer stoss- und zugbetriebsfähigen, ein einziges Trum aufweisenden Transportkette, wobei jede Transportkette mit ihrem einen Endbereich mit dem zugehörigen Antriebsorgan in Wirkwerbindung steht und durch dieses über einen Grossteil ihrer Länge hin- und herbewegbar ist, und an ihrem andern Endbereich Mittel zum Fördern einer Last aufweist, **dadurch gekennzeichnet,** dass das Fördersystem eine oder mehrere Zentralstationen (Z) sowie mehrere autonome Satellitenstationen (S1 bzw. S2) umfasst, dass jede Satellitenstation zumindest mit einer Zentralstation und /oder einer weiteren Satellitenstation durch Transportkettenführungen (34) verbunden ist, und dass jeder Satellitenstation eine eigene Fördervorrichtung derart zugeordnet ist, dass deren Antriebsorgan sich im Bereiche dieser Satellitenstation befindet und die Mittel (3) zum Fördern einer Last von der Satellitenstation aus über die Transportkettenführungen zu der zumindest einen Zentralstation und /oder Satellitenstation hinbewegbar bzw. von dieser wegbewegbar sind.

2. Fördersystem nach Anspruch 1, **dadurch gekennzeichnet,** dass die Transportkettenführungen (34) in unmittelbarer Nähe einer Fahrbahn (2) für das Mittel (3) zum Fördern einer Last angeordnet sind.

3. Fördersystem nach Anspruch 2, **dadurch gekennzeichnet,** dass die Transportkettenführungen (34) in der Mitte der Fahrbahn (2) für das Mittel (3) zum Fördern einer Last angeordnet sind und sich die Fahrbahnpisten (35) der Fahrbahn beidseitig der Transportkettenführung (34) erstrecken.

4. Fördervorrichtung nach Anspruch 3, **dadurch gekennzeichnet,** dass die Transportketteführungen (34) unterhalb der Fahrbahn (2) angeordnet sind.

5. Fördervorrichtung nach den Ansprüchen 3 oder 4, **dadurch gekennzeichnet,** dass die Transportkettenführungen (34) aus einem aus zwei Halbprofilen gebildeten Transportkettenkanal (30) bestehen.

6. Fördersystem nach einem der Ansprüche 2 bis 5, **dadurch gekennzeichnet,** dass die Fahrbahnen (2) Verzweigungen (5) aufweisen, in welchen individuelle Fahrbahnstücke (2a, 2b) eines Satelliten (S1, S2) zu gemeinsamen Fahrbahnstücken (2c) zusammengeführt werden

7. Fördersystem nach Anspruch 6, **dadurch gekennzeichnet,** dass die Verzweigung (5) als Weiche (40) ausgebildet ist, die zwei Fahrbahnstücke (44) in ein gemeinsames Fahrbahnstück (43) zusammenführt.

8. Fördersystem nach Anspruch 7, **dadurch gekennzeichnet,** dass die Weiche (40) mittels Transportkettenkanäle (34, 30) aufweisenden Übergangsstücken (53) mit den auf sie führenden Fahrbahnen (43, 44) verbunden ist.

9. Fördersystem nach einem der vorangehenden Ansprüche, **dadurch gekennzeichnet,** dass in den Fahrbahnen (2) Durchgänge (6) vorgesehen sind, mittels welchen ein Traversieren von in Überbodenhöhe verlaufenden Fahrbahnen ermöglicht wird.

10. Fördersystem nach Anspruch 9, **dadurch gekennzeichnet,** dass die Durchgänge (6) ein aufklappbares Fahrbahnstück (2') aufweisen.

11. Fördersystem nach Anspruch 10, **dadurch gekennzeichnet,** dass das aufklappbare Fahrbahnstück (2') eine Sicherheitsklinke (76) aufweist, mittels welcher beim Aufklappen des Fahrbahnstüches der Fahrbetrieb zumindest im näheren Bereich des Durchganges unterbrechbar ist.

12. Fördersystem nach einem der vorangehenden Ansprüche, **dadurch gekennzeichnet,** dass das an einem der beiden Endbereiche angeordnete Mittel (3) zum Fördern einer Last ein Wagen (60) ist.

13. Fördervorrichtung nach Anspruch 12, **dadurch gekennzeichnet,** dass der Wagen (60) zwei Rollenschemel (62) mit Rollen (67) und einen Tablettaufsatz (61) aufweist.

14. Fördervorrichtung nach Anspruch 13, **dadurch gekennzeichnet,** dass die Transportkette (65) an jedem der beiden Rollenschemel (62) fixiert ist und jeder Rollenschemel (62) einen Führungsstift (85) aufweist, der in den Kettenkanal (30) mit den Führungsflächen (51) hineinragt, so dass jeder Rollenschemel (62) zwangsgeführt ist.

15. Fördersystem nach einem der vorangehenden Ansprüche, **dadurch gekennzeichnet,** dass die Fahrbahn (2) mit der Transportkettenführung (34), die Verzweigung (5) und der Durchgang (6) so zueinander angeordnet sind, dass die von den jeweiligen Antriebsorganen (1) durch Hin- und Herbewegen der zugehörigen Transportkette (65) verschobenen Mittels (3) zum Fördern einer Last durch die Transportkettenführungen der

9

Verzweigungen (5), der Übergangsstücke (53) und der geschlossemen Durchgänge (6) bewegbar sind.

16. Verzweigung zu Fördersystem nach Anspruch 1, **gekennzeichnet durch** ein Drehstück (21), mit einem Transportkettenführungsteil (34, 30), zum wahlweisen Verbinden eines von zwei Fahrbahnstücken (44) mit einem gemeisamen Fahrbahnstück (43).

## Claims

1. Conveying system with a plurality of conveyors with in each case one drive member, as well as a push and pull operable conveyor chain having a single strand, each conveyor chain being in operative connection by its one end region with the associated drive member and by means of the same is reciprocatable over a large part of its length and has at its other end region means for conveying a load, characterized in that the conveying system comprises one or more central stations (Z), together with several autonomous satellite stations (S1, S2), that each satellite station is connected to at least one central station and/or a further satellite station by conveyor chain guides (34) and that with each satellite station is associated its own conveyor in such a way that its drive member is located in the vicinity of the said satellite station and the means (3) for conveying a load from the satellite station can be moved to or from the at least one central station and/or satellite stations via conveyor chain guides.

2. Conveying system according to claim 1, characterized in that the conveyor chain guides (34) are located in the immediate vicinity of a path or track (2) for the means (3) for conveying a load.

3. Conveying system according to claim 2, characterized in that the conveyor chain guides (34) are located in the centre of the path (2) for the means (3) for conveying a load and the path portions (35) extend on either side of the conveyor chain guide (34).

4. Conveying system according to claim 3, characterized in that the conveyor chain guides (34) are located below the path (2).

5. Conveying system according to claims 3 or 4, characterized in that the conveyor chain guides (34) comprise a conveyor chain channel (30) formed by two half-profiles.

6. Conveying system according to one of the claims 2 to 5, characterized in that the paths (2) have branches (5) in which are brought together individual path portions (2a, 2b) of a satellite (S1, S2) so as to form common path portions (2c).

7. Conveying system according to claim 6, characterized in that the branch (5) is constructed as switch points (40) bringing together two path portions (44) to form a common path portion (43).

8. Conveying system according to claim 7, characterized in that the points (40) are connected by means of transition pieces (53) having conveyor chain channels (34, 30) with the paths (43, 44) leading to the same.

9. Conveying system according to one of the preceding claims, characterized in that the path (2) have passages (6) by means of which it is possible to traverse paths located at alive floor level.

10. Conveying system according to claim 9, characterized in that the passages (6) have a swing-up path portion (2').

11. Conveying system according to claim 10, characterized in that the swing-up path portion (2') has a safety catch (76), which is able to interrupt operation at least in the vicinity of the passage when the path portion is swung up.

12. Conveying system according to one of the preceding claims, characterized in that the means (3) for conveying a load located on one of the two end regions is a vehicle (60).

13. Conveying system according to claim 12, characterized in that the vehicle (60) has two roll means (62) with rolls (67) and a tray attachment (61).

14. Conveying system according to claim 13, characterized in that the conveyor chain (65) is fixed to each of the two roll means (62) and each roll means (62) has a guide pin (85), which projects into the chain channel (30) with the guide faces (51), so that each roll means (62) is forcibly guided.

15. Conveying system according to one of the preceding claims, characterized in that the path (2) with the conveyor chain guide (34), the branch (5) and the passage (6) are so arranged with respect to one another that the means (3) for conveying a load moved by the drive members (1) by the reciprocation of the associated chain (65) can be moved through the conveyor chain guides of the branches (5), the transition pieces (53) and the closed passages (6).

16. Branch for the conveying system according to claim 1, characterized by a rotary piece (21) with a conveyor chain guide part (34, 30) for the random connection of one of the two path portions (44) to a common path portion (43).

## Revendications

1. Système de transport avec une pluralité de mécanismes de transport avec chacun un organe d'entraînement ainsi que chacun un transporteur à chaîne pouvant fonctionner en poussée et en traction, présentant un seul brin, chaque transporteur à chaîne étant en liaison active avec l'organe d'entraînement correspondant par une de ses extrémités et pouvant être déplacé en va-et-vient par celui-ci sur une grande partie de sa longueur, et présentant à son autre extrémité des moyens pour transporter une charge, caractérisé en ce que le système de transport comprend une ou plusieurs stations centrales (Z) ainsi que plusieurs stations satellites autonomes (S1 ou S2), en ce que chaque station satellite est reliée au moins à une station centrale et/ou à une autre station satellite par des guides de transporteur à chaîne (34), et en ce que chaque station satellite dispose d'un mécanisme de transport propre, de telle sorte que son organe d'entraînement se trouve dans le secteur de cette station satellite et le moyen (3) pour transporter une charge à partir de la station satellite par les guides de transporteur à chaîne vers au moins une station centrale et/ou station satellite peut être déplacé vers et à partir de celle-ci.

2. Système de transport selon la revendication 1, caractérisé en ce que les guides de transporteur à chaîne (34) sont disposés à proximité immédiate d'une voie (2) pour le moyen (3) pour transporter une charge.

3. Système de transport selon la revendication 2, caractérisé en ce que les guides de transporteur à chaîne (34) sont disposés au milieu de la voie (2) pour le moyen (3) pour transporter une charge et que les pistes (35) de la voie s'étendent des deux côtés du guide de transporteur à chaîne (34).

4. Système de transport selon la revendication 3, caractérisé en ce que les guides de transporteur à chaîne (34) sont disposés en-dessous de la voie (2).

5. Système de transport selon la revendication 3 ou 4, caractérisé en ce que les guides de transporteur à chaîne (34) se composent d'un canal de transporteur à chaîne (30) formé de deux demi-profils.

6. Système de transport selon l'une des revendications 2 à 5, caractérisé en ce que les voies (2) présentent des embranchements (5) dans lesquels des tronçons de voie individuels (2a, 2b) d'un satellite (S1, S2) sont rassemblés en tronçons de voie communs (2c).

7. Système de transport selon la revendication 6, caractérisé en ce que l'embranchement (5) est conçu comme un aiguillage (40), qui rassemble les deux tronçons de voie (44) en un tronçon de voie commun (43).

8. Système de transport selon la revendication 7, caractérisé en ce que l'aiguillage (40) est relié au moyen de tronçons de transition (53) présentant des canaux de transporteurs à chaîne (34, 30) avec les voies qui y mènent (43, 44).

9. Système de transport selon l'une quelconque des revendications précédentes, caractérisé en ce que des passages (6) sont prévus dans les voies (2), au moyen desquels il est possible de traverser les voies passant au-dessus de la hauteur du sol.

10. Système de transport selon la revendication 9, caractérisé en ce que les passages (6) présentent un tronçon de voie (2') relevable.

11. Système de transport selon la revendication 10, caractérisé en ce que le tronçon de voie relevable (2') présente un cliquet de sûreté (76), au moyen duquel lorsque le tronçon de voie est relevé le trafic peut être interrompu dans le secteur proche du passage.

12. Système de transport selon l'une quelconque des revendications précédentes, caractérisé en ce que le moyen (3) disposé dans l'un des deux secteurs d'extrémité pour le transport d'une charge est un chariot (60).

13. Mécanisme de transport selon la revendication 12, caractérisé en ce que le chariot (60) présente deux bogies (62) avec des galets (67) et un dessus formant tablette (61).

14. Mécanisme de transport selon la revendication 13, caractérisé en ce que le transporteur à chaîne (65) est fixé sur chacun des deux bogies (62) et chaque bogie (62) présente une tige de guidage (85), qui dépasse dans le canal de chaîne (30) avec les surfaces de guidage (51), de sorte que chaque bogie (62) est guidé.

15. Système de transport selon l'une quelconque des revendications précédentes, caractérisé en ce que la voie (2) avec le transporteur à chaîne (34), l'embranchement (5) et le passage (6) sont disposés les uns par rapport aux autres de telle sorte que les moyens (3) poussés par les organes d'entraînement (1) par le déplacement en va-et-vient du transporteur à chaîne (65) correspondant pour le transport d'une charge peuvent être déplacés sur les guides de transporteur à chaîne des embranchements, des tronçons de transition (53) et des passages fermés (6).

16. Système de transport selon la revendication 1, caractérisé en ce qu'il comporte une pièce rotative (21), avec une partie de guidage du transporteur à chaîne (34, 30) pour relier au choix l'un de deux tronçons de voie (44) avec un tronçon de voie commun (43).

**FIG. 1**

**FIG. 2**

**FIG. 3**

FIG. 4

FIG. 5

FIG. 6

FIG. 7

35    33    51    33    35

32

31

34   30   34

FIG. 8

44    44

56

53    53

45    45

30    30

46

41

55    40

57

XI

47

X

54

42   30   57'

X

53

43

FIG. 9

15

FIG. 10

FIG. 11

FIG. 12

FIG. 13

FIG. 14

FIG. 15

EP 0 316 273 B1

FIG. 16

FIG. 17